# EUROPEAN PATENT APPLICATION

(11) **EP 4 366 250 A1**
(43) Date of publication of application: **08.05.2024**
(21) Application number: 22836935.1
(22) Date of filing: 06.07.2022
(51) Int. Cl.: H04L 12/46

(54) **CROSS-DEVICE LINK AGGREGATION MESSAGE PROCESSING METHOD AND SYSTEM, SWITCH, AND STORAGE MEDIUM**

(30) Priority: 07.07.2021 CN 202110768536
(71) Applicant: ZTE Corporation, Shenzhen, Guangdong 518057 (CN)
(72) Inventor: LIN, Ning, Shenzhen, Guangdong 518057 (CN)
(74) Representative: Pennacchio, Salvatore Giovanni
(86) International application number: PCT/CN2022/104017
(87) International publication number: WO 2023/280186

(57) **Abstract**

The embodiments of the present disclosure relate to the field of communications, and in particular, to a cross-device link aggregation packet processing method and system, a switch and a storage medium. The method applied to a first switch in a cross-device link aggregation switch system includes: receiving a first packet sent by a gateway device; if the first address corresponding to the first packet is not found in the packet table entry, sending the first packet to the second switch through the first link, so that the second switch queries the first address according to the first packet, or acquires the first address from a server communicatively connection with the cross-device link aggregation switch system, and forwarding the first packet according to the first address; wherein the packet table entry stores a corresponding relationship between the first packet and the first address.

## Description

### Cross-Reference to Related Application

This disclosure is based on Chinese Patent Application No. 202110768536.8, filed with the Chinese Patent Office on 07 July 2021 and claims the priority of the Chinese Patent Application, which is incorporated herein by reference in its entirety.

### Technical Field

The embodiments of the present disclosure relate to the field of communication transmission, and in particular, to a cross-device link aggregation packet processing method and system, a switch and a storage medium.

### Background

Generally, when the cross-device link aggregation switch system synchronizes the packet table entries, it is required to keep the packet table entries between various switch devices completely the same, while various switches in the cross-device link aggregation switch system can use switches with different specifications to perform networking, and it is not necessarily required to require completely the same switches.

In order to ensure the consistency of packet table entries between the cross-device link aggregation switch systems, information is synchronized between the two switches, if the number of table entries of each switch device is consistent, such synchronization is not problematic, but if the number of packet table entries of each switch is inconsistent, such a process will bring the following defect: when the switch on the side with the large number of table entries is synchronized with the switch on the side with the small number of table entries, a problem that writing fails may occur on a side with a small number of table entries; if a data packet of a packet entry is not learned and is forwarded to a side on which the packet entry has been overwritten, a trigger packet is sent to a Central Processing Unit (CPU), and the CPU sends a packet request, but the learned packet cannot be written into hardware as it is, so that the data stream continuously impacts the CPU, and the packet learning request is continuously triggered and CPU resources are occupied. In this way, the packet capacity on the non-full side of the packet table entries in the switch system is wasted to some extent, and the networking cost is increased.

### Summary

Provided is a cross-device link aggregation packet processing method, which is applied to a first switch in a cross-device link aggregation switch system, wherein the cross-device link aggregation switch system further comprises a second switch. The method includes: receiving a first packet sent by a gateway device; if the first address corresponding to the first packet is not found in the packet table entry, the first packet is sent to the second switch through the first link, so that the second switch queries the first address according to the first packet, or acquires the first address from a server communicatively connected to the cross-device link aggregation switching system, forwarding the first packet according to the first address; the first link is a communication link between the first switch and the second switch, and corresponding relationship between the first packet and the first address is stored in the packet table entry.

Embodiments of the present disclosure also provide a cross-device link aggregation packet processing method, applied to a second switch in a cross-device link aggregation switch system. The cross-device link aggregation switch system further includes a first switch. The method includes: receiving a first packet sent by the first switch via a first link; wherein the first link is a communication link between the first switch and the second switch; searching for a first address corresponding to the first packet in a packet table entry of the second switch; if the first address corresponding to the first packet is not found, acquiring the first address from a server communicatively connection with the cross-device link aggregation switch system according to the first packet, forwarding the first packet according to the first address, and storing a corresponding relationship between the first packet and the first address.

Embodiments of the present disclosure further provide a cross-device link aggregation switch system, including a first switch and a second switch. The first switch includes: a first receiving module, configured to receive a first packet sent by a gateway device; a forwarding module for sending the first packet to the second switch via the first link if the first address corresponding to the first packet is not queried in the packet table entries; wherein the first link is a communication link between the first switch and the second switch, and the packet table entry stores a corresponding relationship between the first packet and the first address; the second switch includes: a second receiving module, configured to receive the first packet sent by the first switch by using a first link; wherein the first link is a communication link between the first switch and the second switch; a querying module, configured to search for, in a packet table entry of the second switch, a first address corresponding to the first packet; an acquisition module for, if a first address corresponding to the first packet is not found, acquiring the first address from a server communicatively connection with the cross-device link aggregation switching system according to the first packet, and forwarding the first packet according to the first address.

An embodiment of the present disclosure further provides a switch, including: at least one processor; and a memory communicatively connected to the at least one processor; the memory stores an instruction that can be executed by the at least one processor, when the instruction is executed by the at least one processor, cause the at least one processor to execute the method applied to the first switch or execute the method applied to the second switch.

Embodiments of the present disclosure further provide a computer readable storage medium, which stores a computer program. When being executed by a processor, the computer program implements the above method applied to a first switch or implements the above method applied to a second switch.

### Brief Description of the Drawings

One or more embodiments are illustrated by way of example in the figures of the accompanying drawings, which do not constitute a limitation on the embodiments, and elements in the figures having the same reference numerals are designated as like elements, and the figures of the drawings are not to scale unless otherwise specified.
Figure 1 is a flowchart of a method for processing cross-device link aggregation packets according to an embodiment of the present disclosure;
Figure 2 is a flowchart of a method for processing cross-device link aggregation packets according to another implementation of the present disclosure;
Figure 3 illustrates a cross-device link aggregation switch system according to an embodiment of the present disclosure;
Figure 4 is a schematic diagram of an application of a cross-device link aggregation switch system according to an embodiment of the present disclosure; and
Figure 5 is a diagram of a switch provided in accordance with an embodiment of the present disclosure.

### Detailed Description of the Embodiments

To make the objectives, technical solutions, and advantages of the embodiments of the present disclosure clearer, the following describes each embodiment of the present disclosure in detail with reference to the accompanying drawings. However, a person of ordinary skill in the art may understand that, in the embodiments of the present disclosure, many technical details are put forward to help a reader understand the present disclosure better. However, even without these technical details and various changes and modifications based on the following embodiments, the claimed technical solutions of the present disclosure can be implemented. Dividing of the following embodiments is for convenience of description, and shall not constitute any limitation to specific implementations of the present disclosure. The embodiments may be referred to in combination with each other without any contradiction.

The terms "first" and "second" in the embodiments of the present disclosure are only used for the purpose of description, and cannot be understood as indicating or implying relative importance or implicitly indicating the number of indicated technical features. Thus, the features defined by "first" and "second" may explicitly or implicitly include at least one of the features. In the description of the present disclosure, the terms "including" and "having" and any variations thereof are intended to cover a non-exclusive inclusion. For example, a system, product, or device that includes a series of components or units is not limited to the listed components or units, but can optionally include components or units not listed, or can optionally include other components or units inherent to such products or devices. In the description of the present disclosure, the meaning of "a plurality of" is at least two, for example, two, three, etc. , unless specified otherwise.

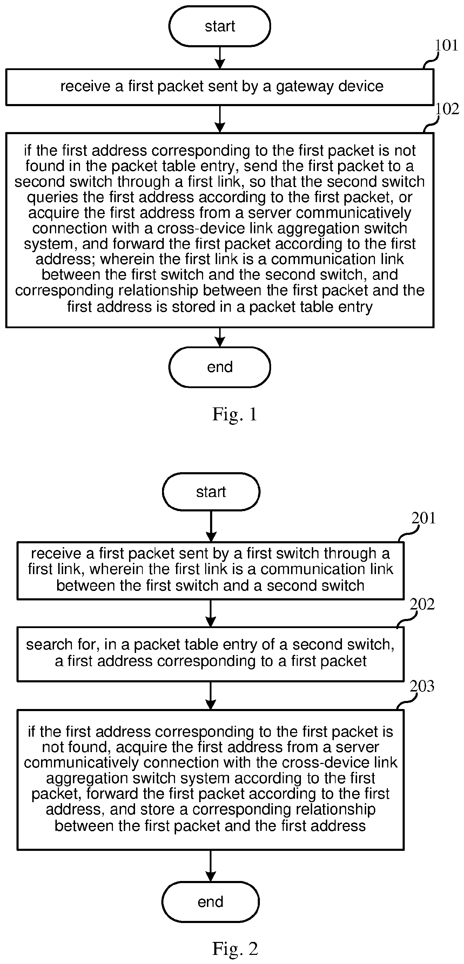

An embodiment of the present disclosure relates to a cross-device link aggregation packet processing method, which is applied to a first switch in a cross-device link aggregation switch system. The cross-device link aggregation switch system further includes a second switch. As shown in figure 1, the specific process includes:
Step 101: receive a first packet sent by a gateway device;
Step 102, if the first address corresponding to the first packet is not found in the packet table entry, sending the first packet to a second switch via a first link, so that the second switch queries the first address according to the first packet, or acquires the first address from a server communicatively connection with a cross-device link aggregation switch system, and forwards the first packet according to the first address; the first link is a communication link between the first switch and the second switch, and corresponding relationship between the first packet and the first address is stored in a packet table entry.

In this embodiment, by enabling the communication link transmission between the switches, the capacity of the packet table entries of the cross-device link aggregation switch system can no longer depend on the one with the smallest number of switch entries in the system, the packet storage resources of various switches can be applied sufficiently, thereby greatly improving the packet capacity of a cross-device link aggregation switch system, the device performance is improved, and network networking costs are saved.

The implementation details of the method for processing the cross-device link aggregation packet of the present embodiment will be described in detail below. The following content is only for the convenience of understanding the provided implementation details and is not a requirement for implementing the present embodiment.

In step 101, receiving a first packet sent by a gateway device;
Generally, the cross-device link aggregation switch system needs to keep the table entries of the two switch devices identical when performing table entry synchronization, two switches in the cross-device link aggregation switch system can use two switches with different specifications to perform networking, it is not necessary to require exactly the same switch, and therefore, the packet table entries may need to be synchronized, however, a switch with small storage space has no space for storing the packet table entries, the first switch in this embodiment is used as an example. In some examples, if a corresponding first address cannot be found in a packet table entry according to a first packet, a query request needs to be sent to a CPU of a first switch; the CPU of the first switch acquires the first address corresponding to the first packet from an external device, and stores a corresponding relationship between the first packet and the first address in the packet table entry for next invocation; however, in a case that the storage of the packet table entry is saturated, even if the CPU requests the first address corresponding to the first packet, the first switch cannot store the first address, which results in that the CPU always sends the request instruction, thereby wasting operating space of resources.

In an example, after receiving the first packet sent by the gateway device, the method further includes detecting a state of a packet table entry of the first switch, and if the storage of the packet table entry is saturated, changing an egress of an interface route of the first switch from pointing to the CPU to pointing to a port of the first link, the first link being a communication link between the first switch and the second switch. That is, the direction of the packet is changed by changing the direction of the routing exit. It can be seen that, implementation of changing the direction of the packet in the first switch is not limited to the foregoing path. By means of the implementation of the present example, when it is detected that a packet table entry is in a saturation state, an interface route of a first switch is changed from pointing to a CPU to pointing to a first link, and the described dead-loop process is avoided in some cases.

At step 102, if the first address of the first packet is not found in the packet table entries, the first packet is sent to the second switch through the first link, so that the second switch queries the first address according to the first packet, or obtains the first address from a server communicatively connection with the cross-device link aggregation switch system, and forwards the first packet according to the first address.

In an example, after the first packet sent by the gateway device is received, whether a first address corresponding to the first packet exists in a packet table entry of the first switch is queried first, and if the first address does not exist, the first packet is sent to the second switch through the first link, and the second switch processes the first packet, for example, querying the first address, and storing a corresponding relationship between the first packet and the first address.

That is, in the cross-device link aggregation switch system, when the storage spaces of the packet table entries of two switches constituting the system are different, if the packet table entries of one switch are completely written, the tasks of learning and forwarding are handed over to a switch with a larger storage space of the other packet table entry for processing.

In addition, after the first packet is sent to the second switch through the first link, if a message sent by the server according to the first packet is received, the message is forwarded to the second switch. That is to say, when the first switch does not have an idle packet table entry space to process the first packet, the second switch completely processes the first packet, including a message sent by a processing server according to the first packet, so as to ensure the efficiency of the cross-device link aggregation switch system in processing information. In some embodiments, if the first packet is an Address Resolution Brief of the case (ARP) packet and carries a target IP address, if the message sent by the server according to the first packet is the MAC address corresponding to the IP address in the ARP packet, the first switch learns the corresponding relationship between the IP address and the MAC address, however, the learning result is not stored in the packet table entry, but synchronized to the second switch through the table entry synchronization principle, the second switch is configured to store data.

In an example, a corresponding relationship between an IP address and a MAC address is stored in a packet table entry; the first packet is an ARP packet, and the packet further carries a target IP address; the first address is a MAC address of the target. That is, in this implementation, the packet table entry stored in the first switch is a corresponding relationship between the IP address and the MAC address, and when the message needs to be sent to a target, the packet table entry is queried according to the target IP address to obtain the target MAC address, and the message is forwarded to the MAC address. If a corresponding MAC address cannot be found in a packet table entry according to a target IP, a query request needs to be sent to a CPU of a first switch; the CPU of the first switch acquires the target MAC address from an external device, and stores a corresponding relationship between the target IP address and the MAC address in the packet table entry so as to be invoked next time; however, in the case that the storage of the packet table entry is saturated, even if the CPU requests the target MAC address, the first switch cannot store the packet table entry, which results in that the CPU always sends the request instruction, thus wasting the resource running space. However, in this step, if the storage of the packet table entry is saturated, the first packet acquired by the first switch is forwarded to the second switch, thereby avoiding a situation in which the first switch acquires the target MAC address but cannot store the address and the corresponding relationship, and a closed-loop request is generated.

That is, the first packet is allowed to be sent to the second switch.

In an example, if partial contents of the packet table entries in the first switch are deleted, after the first switch receives the first packet sent by the gateway device, if the first address corresponding to the first packet is not found in the packet table entries, the first switch queries the first address according to the first packet, or obtains the first address from the server, and forwards the first packet according to the first address.

Specifically, a timed aging phenomenon may exist in a corresponding relationship stored in a packet table entry, that is, the corresponding relationship is deleted when a preset aging time threshold is exceeded since storage; or in some examples, after detecting a part of the stored information and exceeding a pre-set idle time threshold value, the first switch is still unused, and will delete same; or in some examples, if the first switch detects that the stored information is invalid, for example, the stored IP address or MAC address is disconnected from the switch device, the first switch deletes the stored information. After the first switch deletes the stored packet table entry information, the packet table entry is in an unsaturated state. In this case, the first switch can perform processing operations such as query, learning, forwarding, etc. normally, for example, changing an egress of an interface route of the first switch from a port pointing to a first link to a CPU, so that the first switch processes a received first packet by itself, and a common processing mode is recovered.

In addition, the first link includes a peer-link.

By means of the present implementation, by enabling communication link transmission between switches, the capacity of a packet table entry of a cross-device link aggregation switch system can no longer depend on which one of the two switches in the system has a smaller packet table entry storage space, the packet table entry resources of the two switches can be fully applied, thereby greatly improving the device performance of a cross-device link aggregation switch system, saving networking costs.

An embodiment of the present disclosure relates to a cross-device link aggregation packet processing method, which is applied to a second switch in a cross-device link aggregation switch system. The cross-device link aggregation switch system further includes a first switch. The specific process is shown in figure 2, including:
Step 201, receiving a first packet sent by a first switch via a first link; wherein the first link is a communication link between the first switch and the second switch;
Step 202, searching for a first address corresponding to the first packet in a packet table entry of the second switch;
Step 203, if the first address corresponding to the first packet is not found, acquiring the first address from a server communicatively connection with the cross-device link aggregation switch system according to the first packet, and forwarding the first packet according to the first address.

In steps 201 to 203, receiving a first packet sent by a first switch; searching for a first address corresponding to the first packet in a packet table entry of the second switch; if the first address corresponding to the first packet is not found, acquiring the first address from a server communicatively connection with the cross-device link aggregation switch system according to the first packet, and forwarding the first packet according to the first address.

In one example, acquiring a first address from a server communicatively connected to a cross-device link aggregation switch system according to a first packet includes: sending a request for acquiring the first address of the first packet to a server communicatively connected to the cross-device link aggregation switch system; if a response message of the server for the request is received, acquiring the first address according to the response message; if a response message of the server for the request forwarded by the first switch is received, acquire the first address according to the forwarded response message. That is, after receiving, through the first link, the first packet forwarded by the first switch, the second switch indicates that a packet table entry in the first switch cannot be found and the packet table entry is saturated, therefore, the second switch performs corresponding processing on the first packet, for example, the first address is searched from a packet table entry of the second switch, or acquired from a server communicatively connected to the cross-device link aggregation switch system through the first packet, and store a corresponding relationship between the first packet and the first address. If the cross-device link aggregation switch system has the same externally presented address information, the server sends a response message of the request for acquiring the first address sent by the second switch to the first switch whose packet table entry is saturated, the second switch forwards the response message to the second switch, and the second switch acquires the first address according to the response message; alternatively, the server directly sends the response message to the second switch, and the second switch obtains the first address according to the response message.

In one example, the first link includes a peer-link; the packet table entry includes an ARP packet that carries a target IP address.

In an example, the second switch whose packet table entry of the cross-device link aggregation switch system is not fully written receives the first packet from the first link, searches the packet table entry of the present switch to find out whether the corresponding relationship of the first packet can be found, and if the corresponding relationship can be found, forwards the first packet according to the corresponding first address. If the packet table entry cannot be found, the packet table entry learning is triggered, that is, the CPU is triggered to acquire the first address corresponding to the first packet from other devices, and after learning is completed, the acquired corresponding relationship is stored in the packet table entry. Since the packet table entry of the first switch is already saturated, the packet table entry synchronization operation to the first switch is not triggered anymore. In addition, if the response message is sent to the first switch whose packet table entries are saturated after the packet table entry learning is triggered, the first switch can complete the learning of the corresponding relationship in the packet table entries, but does not store the learning result, and directly sends the learning result to the second switch through packet table entry synchronization to store the learning result. For example, if the first packet is an ARP packet and carries a target IP address, and the server sends a message according to the first packet as a MAC address corresponding to the IP address in the ARP packet, the first switch learns a corresponding relationship between the IP address and the MAC address, but does not store the corresponding relationship in a packet table entry, but synchronizes a learning result to the second switch through a table entry synchronization principle, and the second switch stores the learned result.

In this implementation, by enabling communication link transmission between switches, the capacity of the packet table entries of the cross-device link aggregation switch system can no longer depend on the one with the smallest number of switch entries in the system, the capacity in the cross-device link aggregation switch system (for example, the storage resource of the packet table entry) can be fully used, thus, the storage capacity of the packet table entry of the cross-device link aggregation switch system is greatly improved, and the device performance is improved, saving networking costs.

The step division of the above various methods is only for the purpose of clear description, and during implementation, the methods may be combined into one step or some steps may be divided into a plurality of steps, and all the steps are within the scope of protection of the present patent as long as they include the same logic relationship; it is within the scope of protection of the patent to add insignificant modifications to or introduce insignificant designs into the algorithms or flows, but not to change the core design of the algorithms and flows.

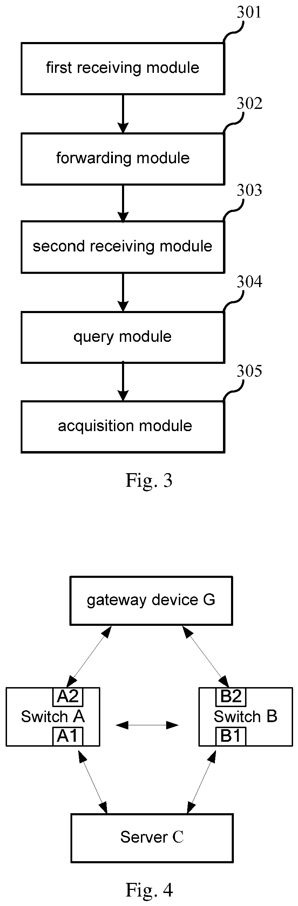

An embodiment of the present disclosure relates to a cross-device link aggregation switch system. As shown in figure 3, the cross-device link aggregation switch system includes: a first switch and a second switch, wherein the first switch includes:
A first receiving module 301, configured to receive a first packet sent by a gateway device;
A forwarding module 302 for sending the first packet to the second switch via the first link if the first address corresponding to the first packet is not queried in the packet table entries; wherein the first link is a communication link between the first switch and the second switch, and a corresponding relationship between the first packet and the first address is stored in a packet table entry;
The second switch includes:
   A second receiving module 303, configured to receive the first packet sent by the first switch through a first link; wherein the first link is a communication link between the first switch and the second switch;
   A querying module 304, configured to search for, in a packet table entry of the second switch, a first address corresponding to the first packet;
   The acquisition module 305, configured to, if the first address corresponding to the first packet is not found, acquire the first address from a server communicatively connection with the cross-device link aggregation switch system according to the first packet, and forwarding the first packet according to the first address.

In the first receiving module 301, if it is detected that a part of content in a packet table entry of the first switch is deleted, after the first switch receives the first packet sent by the gateway device, if the first address corresponding to the first packet is not found in the packet table entry, query the first address according to the first packet, or acquire the first address from the server, Forwarding the first packet according to the first address.

After the forwarding module 302 sends the first packet to the second switch via the first link, the method further includes: if a message sent by the server according to the first packet is received, forwarding the message to the second switch.

In an acquisition module 305, acquiring a first address from a server communicatively connected to a cross-device link aggregation switch system according to a first packet includes: sending a request for acquiring the first address of the first packet to a server communicatively connected to the cross-device link aggregation switch system; if a response message of the server for the request is received, acquiring the first address according to the response message; if a response message of the server for the request forwarded by the first switch is received, acquire the first address according to the forwarded response message. After the first address is obtained, a corresponding relation between the first address and the first packet is stored.

In addition, the first link includes a peer-link; the first packet includes an ARP packet, and carries a target IP address; the packet table entry stores the corresponding relationship between the IP address and the MAC address.

For better understanding, the following describes an execution process of the system, as shown in figure 4:
For example, switches A and B constitute a cross-device link aggregation switch system, in which switch A is a main device, a port A1 of switch A and a port B1 of switch B constitute a cross-device aggregation link and are connected to a server C, a main server link C1 is connected to a port A1 of switch A, and C2 is connected to a port B1 of switch B. The uplink A2 of switch A and the uplink B2 of switch B are connected to the gateway G device.

The storage space of the ARP packet entry of the switch B is relatively small, that is, the switch B is the first switch, the storage space of the ARP entry of the switch A is large, that is, the switch A is the second switch, an address of a data packet is 10.10.10.123, which is sent from the gateway device G to the aggregation switch system, and an IP address of an aggregation link layer 3 interface formed by A1B1 of the switch AB is 10.10.10.1, the interface routing is 10.10.10.0 255.255.255.0, and the switch system does not have a corresponding packet table entry of 10.10.10.123, that is, there is no MAC address corresponding to the interface IP.

In the case where the ARP packet entries of switches A and B are not fully written, no matter whether the 10.10.10.123 data packet is sent to switch A or switch B, the table is looked up and cannot be forwarded; after receiving the data packet, the switch A or B hits the interface route 10.10.10.0 255.255.255.0, and the outlet points to the CPU and forwards the message to the CPU; the switch triggers ARP packet learning, acquires a MAC address corresponding to 10.10.10.123 from the server, learns the switch, and stores same; the switch learning the ARP packet entry synchronizes the ARP packet entry to another switch.

Under the condition that the ARP packet entry of switch B is full and the data packet with the destination IP address of 10.10.10.123 is received, after the ARP packet entry of switch B is full, the next hop of the layer 3 interface network segment route 10.10.10.0 255.255.255.0 is directed to the peer-link; the switch B receives a data packet with a destination IP of 10.10.10.123, and inquires that an ARP packet entry is not found, the data stream hits the network segment route of 10.10.10.0, and is forwarded to the switch A from the peer-link; after receiving the data packet with the destination IP being 10.10.10.123, the switch A hits the interface route 10.10.10.0 255.255.255.0, and the outlet points to the CPU, and forwards the message to the CPU; if the switch A triggers ARP learning and learns the MAC address corresponding to 10.10.10.123 from the server, the switch A learns and stores the MAC address, and the ARP packet entry is not synchronized to the switch B; if the switch A triggers ARP learning, and the server sends an ARP response to the switch B, the switch B learns a MAC address corresponding to 10.10.10.123, does not write this ARP address into hardware, and synchronizes the ARP address to the switch A through an ARP packet table entry, and the switch A writes the hardware.

In the case where a packet table entry of 10.10.10.123 is written into a switch A, if a data stream is sent to the switch A, the switch A searches for an ARP packet entry and finds a MAC address corresponding to 10.10.10.123, and normally forwards same; if the data flow is sent to the switch B, the switch B does not hit the ARP packet entry, the data flow hits the network segment route 10.10.10.0, and is forwarded to the switch A from the peer-link interface, and the switch A searches the ARP packet entry, finds the MAC address corresponding to 10.10.10.123, and forwards normally.

In the case that the packet table entries of the switch B are partially deleted, the switch B directs the egress of the layer-three interface route 10.10.10.0 255.255.255.0 back to the CPU, and recovers the normal packet table entry learning and synchronization process; if the packet table entry of switch B is completely written again, the foregoing action of the packet table entry of switch B being completely filled is repeated.

That is to say, compared with the related processing method, by the processing of such technical means, it is only necessary to change the egress of the layer-three interface routing from pointing to the CPU to pointing to the peer-link interface in the switch in which a certain packet table entry of the cross-device link aggregation switch system is completely written, therefore, in the case that the packet table entry is not found, the packet of the device may be directed to another device through the peer-link interface, ARP learning is triggered by taking over another device. In this way, even in a state that a packet table entry of a certain switch in the cross-device link aggregation switch system is completely written, normal packet table entry learning and data forwarding can still be continued by using a packet table entry resource of another switch.

In the present embodiment, by enabling communication link transmission between switches, the capacity of a packet table entry of a cross-device link aggregation switch system can no longer depend on the one with the smallest number of switch table entries in the system, the packet storage resources of various switches can be applied sufficiently, thereby greatly improving the packet capacity of a cross-device link aggregation switch system, the device performance is improved, and network networking costs are saved.

It is not difficult to find that the present embodiment is a system embodiment corresponding to the above embodiment, and the present embodiment can be implemented in cooperation with the above embodiment. Related technical details mentioned in the foregoing embodiments are still valid in this embodiment, and are not described herein again to reduce repetition. Accordingly, the related art details mentioned in the present embodiment are also applicable in the described embodiments.

It is worth mentioning that each module involved in the present embodiment is a logic module. In a practical application, one logic unit may be one physical unit, may also be a part of one physical unit, and may also be implemented by using a combination of a plurality of physical units. In addition, in order to highlight the inventive part of the present disclosure, the present embodiment does not introduce units less closely related to solving the technical problem proposed in the present disclosure, but this does not indicate that other units are not present in the present embodiment.

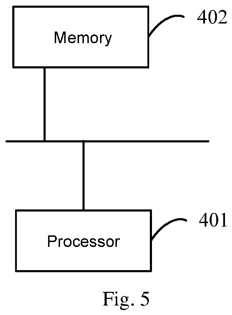

An embodiment of the present disclosure relates to a switch. As shown in figure 5, the switch includes at least one processor 401; and ,
A memory 402 communicatively connected to the at least one processor; wherein,
The memory stores an instruction that can be executed by the at least one processor, wherein the instruction is executed by the at least one processor, so that the at least one processor can execute the cross-device link aggregation packet processing method applied to the first switch or execute the cross-device link aggregation packet processing method applied to the second switch.

The memory and the processor are connected in a bus manner, the bus may include any number of interconnected buses and bridges, and the bus connects various circuits of the one or more processors and the memory together. The bus may also connect a variety of other circuits, such as peripheral devices, voltage regulators, and power management circuitry, which are well known in the art and therefore are not described further herein. The bus interface provides an interface between the bus and the transceiver. A transceiver may be one element or multiple elements, such as multiple receivers and transmitters, that provide a means for communicating with various other devices over a transmission medium. Data processed by a processor is transmitted on a wireless medium through an antenna, and further, the antenna receives the data and transmits the data to the processor.

The processor is responsible for managing a bus and general processing, and can further provide various functions, including timing, peripheral interfaces, voltage regulation, power management, and other control functions. And the memory may be used to store data used by the processor in performing operations.

An embodiment of the present disclosure relates to a computer readable storage medium, which stores a computer program. The computer program implements the foregoing method embodiments when being executed by a processor.

That is, a person skilled in the art may understand that all or a part of the steps of the methods in the foregoing embodiments may be implemented by a program instructing relevant hardware. The program is stored in a storage medium and includes several instructions for instructing a device (which may be a single chip, a chip, or the like) or a processor (processor) to execute all or a part of the steps of the methods in the embodiments of the present disclosure. The foregoing storage medium includes: any medium that can store program codes, such as a USB flash disk, a removable hard disk, a Read-Only Memory (ROM), a Random Access Memory (RAM), a magnetic disk, or an optical disk.

A person of ordinary skill in the art may understand that the foregoing embodiments are specific embodiments for implementing the present disclosure, and in practical applications, various changes may be made in form and details without departing from the spirit and scope of the present disclosure.

## Claims

1. A cross-device link aggregation packet processing method, applied to a first switch in a cross-device link aggregation switch system, wherein the cross-device link aggregation switch system comprises a second switch, and the method comprises:
receiving a first packet sent by a gateway device;
when the first address corresponding to the first packet is not found in the packet table entry, sending the first packet to the second switch through the first link, so that the second switch queries the first address according to the first packet, or acquires the first address from a server communicatively connected to the cross-device link aggregation switching system, forwarding the first packet according to the first address;
wherein the first link is a communication link between the first switch and the second switch, and corresponding relationship between the first packet and the first address is stored in the packet table entry.

2. The method according to claim 1, wherein the first packet comprises an address resolution protocol, ARP, packet carrying a target IP address;
the first address comprises a target MAC address.

3. The method according to claim 1 or 2, the method further comprises:
when part of contents in the packet table entry of the first switch are deleted, after the first switch receives the first packet sent by the gateway device, and when a first address corresponding to the first packet is not found in the packet table entry, querying the first address according to the first packet, or acquiring the first address from the server, and forwarding the first packet according to the first address.

4. The method according to any one of claims 1 to 3, wherein after sending the first packet to the second switch through the first link, the method further comprises:
when a message sent by the server according to the first packet is received, forwarding the message to the second switch.

5. A cross-device link aggregation packet processing method, applied to a second switch in a cross-device link aggregation switch system, the cross-device link aggregation switch system further comprises a first switch, and the method comprises:
receiving a first packet sent by the first switch through a first link; wherein the first link is a communication link between the first switch and the second switch;
searching for a first address corresponding to the first packet in a packet table entry of the second switch;
when the first address corresponding to the first packet is not found, acquiring the first address from a server communicatively connection with the cross-device link aggregation switch system according to the first packet, forwarding the first packet according to the first address, and storing a corresponding relationship between the first packet and the first address.

6. The method according to claim 5, wherein acquiring, according to the first packet, the first address from a server communicatively connected to the cross-device link aggregation switching system comprises:
sending, to a server communicatively connected to the cross-device link aggregation switching system, a request for acquiring a first address of the first packet;
when a response message of the server for the request is received, acquiring the first address according to the response message;
when a response message of the server for the request and forwarded by the first switch is received, acquiring the first address according to the forwarded response message.

7. The method according to claim 5 or 6, wherein the first link comprises a peer-link;
the packet table entry comprises an ARP packet that carries a target IP address.

8. A cross-device link aggregation switch system, comprising a first switch and a second switch, wherein the first switch comprises:
a first receiving module, configured to receive a first packet sent by a gateway device;
a forwarding module, configured to send the first packet to the second switch through the first link when the first address corresponding to the first packet is not found in a packet table entry; wherein the first link is a communication link between the first switch and the second switch, and the packet table entry stores a corresponding relationship between the first packet and the first address;
the second switch comprises:
a second receiving module, configured to receive the first packet sent by the first switch through a first link; wherein the first link is a communication link between the first switch and the second switch;
a querying module, configured to search for, in a packet table entry of the second switch, a first address corresponding to the first packet;
an acquisition module, configure to, when a first address corresponding to the first packet is not found, acquire the first address from a server communicatively connection with the cross-device link aggregation switching system according to the first packet, and forward the first packet according to the first address.

9. A switch comprising:
at least one processor; and ,
a memory communicatively connected to the at least one processor; wherein,
the memory stores an instruction executable by the at least one processor, when the instruction is executed by the at least one processor, causes the at least one processor to implement the method as claimed in any one of claims 1 to 4 or implement the method as claimed in any one of claims 5 to 7.

10. A computer readable storage medium, which stores a computer program, when being executed by a processor, the computer program is configured to implement the method as claimed in any one of claims 1 to 4 or implement the method as claimed in any one of claims 5 to 7.
